# EUROPEAN PATENT APPLICATION

(11) **EP 4 108 385 A1**
(43) Date of publication of application: **28.12.2022**
(21) Application number: 22180826.4
(22) Date of filing: 23.06.2022
(51) Int. Cl.: B25F 3/00, A01G 3/053, B25F 5/02

(54) **POWER EQUIPMENT WITH DETACHABLE ACCESSORY ASSEMBLY**

(30) Priority: 25.06.2021 US 202163215103 P
(71) Applicant: Techtronic Cordless GP, Anderson, SC 29621 (US)
(72) Inventor: BOYLES, Tyler, Liberty, 29657 (US); GUY, Aric, Greenville, 29607 (US)
(74) Representative: Novagraaf Group

(57) **Abstract**

A power equipment including an accessory assembly detachably coupled to a first housing is provided. The accessory assembly includes a power unit interface configured to receive a motive force therethrough. A power unit is attached to a second housing. The power unit is configured to operably couple to the accessory assembly at the power unit interface to provide the motive force therethrough. A first fastener is extendable from the first housing through the accessory assembly to couple the accessory assembly to the first housing. A second fastener is extendable from the first housing to the second housing to detachably couple the power unit to the first housing and position the accessory assembly between the power unit and the first housing.

## Description

### FIELD

The present disclosure relates generally to hand-held power equipment, such as power tools, and removable assemblies thereto.

### BACKGROUND

Power equipment may undergo wear and deterioration of various components at different rates relative to one another within the power equipment, such as due to different cyclic loads, forces, or operating conditions. For instance, tool components are subject to conditions that may differ substantially from power supply units, or other components linking the power supply unit or surrounding the tool or power supply unit.

Accordingly, improved power equipment is desired in the art. In particular, improved power equipment that facilitates removal of an accessory assembly from a power unit, such as to allow for replacement of the power unit or the accessory assembly while reducing a quantity of interfaces, fasteners, or components that may be removed, would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a power equipment is provided. The power equipment includes an accessory assembly detachably coupled to a first housing. The accessory assembly includes a power unit interface configured to receive a motive force therethrough. A power unit is attached to a second housing. The power unit is configured to operably couple to the accessory assembly at the power unit interface to provide the motive force therethrough. A first fastener is extendable from the first housing through the accessory assembly to couple the accessory assembly to the first housing. A second fastener is extendable from the first housing to the second housing to detachably couple the power unit to the first housing and position the accessory assembly between the power unit and the first housing.

In accordance with another embodiment, a power trimmer is provided. The power trimmer includes a blade assembly positioned within a blade housing. The blade housing is detachably coupled to a first housing. The blade assembly includes a power unit interface configured to receive a motive force therethrough. A power unit is attached to a second housing. The power unit is configured to operably couple to the power unit interface to provide the motive force therethrough to the blade assembly. A first fastener is extendable from the first housing through the blade housing to detachably couple the blade assembly to the first housing. A second fastener is extendable from the first housing to the second housing to detachably couple the power unit to the first housing and position the blade housing between the power unit and the first housing.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
Fig. 1 is a perspective view of an exemplary embodiment of a power equipment in accordance with embodiments of the present disclosure;
Fig. 2 is a cross-sectional side view of a portion of an embodiment of the power equipment in accordance with embodiments of the present disclosure;
Fig. 3 is a partially deconstructed perspective view of a portion of an exemplary embodiment of the power equipment in accordance with embodiments of the present disclosure;
Fig. 4 is a perspective view of a portion of an exemplary embodiment of the power equipment in accordance with embodiments of the present disclosure;
Fig. 5 is a partially deconstructed perspective view of a portion of an exemplary embodiment of the power equipment in accordance with embodiments of the present disclosure;
Fig. 6 is a partially deconstructed perspective view of a portion of an exemplary embodiment of the power equipment in accordance with embodiments of the present disclosure; and
Fig. 7 is a flow chart of a method of using power equipment in accordance with aspects of the present disclosure.

Repeat use of reference characters in the present specification and drawings is intended to represent the same or analogous features or elements of the present invention.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

The present disclosure is generally directed to improved power equipment, such as powered hand tools. The present disclosure is related more particularly to power trimmers, including, but not limited to, hedge trimmers, shrub trimmers, or bush trimmers.

Embodiments of an improved power equipment are provided. Embodiments of the power equipment provided herein facilitate removal of an accessory assembly from a power unit, such as to allow for replacement of the power unit or the accessory assembly while reducing a quantity of interfaces, fasteners, or components that may be removed. Embodiments provided herein may facilitate replacement of certain components, such as the accessory assembly, or particularly a blade assembly or other tool component, without necessitating the removal or disassembly of other components, such as the power unit.

Embodiments of the power equipment provided herein include an accessory assembly, such as a blade assembly or other tool component, separably attached to a lower housing or first housing. A power unit, such as any appropriate electrical or mechanical power supply device, is at least partially encased in an upper housing or second housing. A first fastener, such as a mechanical fastener, or particularly a screw or other detachable and removable fastening device, is extended through the lower housing and the accessory assembly to secure the accessory assembly to the lower housing. A second fastener, such as a mechanical fastener, or particularly a screw or other detachable and removable fastening device, is extended through the lower housing and the upper housing to at least partially secure the power unit to the lower housing. Accordingly, the second fastener and power unit are removable without necessitating the removal of the first fastener and the accessory assembly. The power unit is operably coupled to the accessory assembly through a power unit interface, such as to allow for power or other motive force to flow from the power unit to operate the accessory assembly.

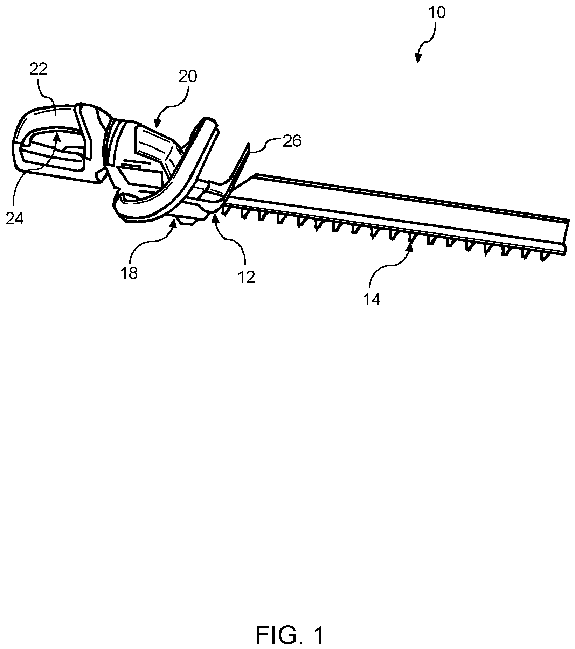

Referring now to the drawings, Fig. 1 is an exemplary embodiment of a power equipment 10 in accordance with aspects of the present disclosure. The power equipment 10 may form a power trimmer, such as a hedge trimmer, bush trimmer, or shrub trimmer, including an accessory assembly 12 driven by a power unit 50. The power equipment 10 may include one or more handles 22, such as depicted in Fig.1, that may be positioned in any desired orientation to allow for the operator to utilize the power equipment 10. It should be appreciated that one or more of the handles 22 may be attached to a lower housing or first housing 18, an upper housing or second housing 20, both the first housing 18 and the second housing 20, or other components of the power equipment 10. The power equipment 10 may further include a user interface 24, such as for example, a trigger or other actuatable element which allows the operator to engage and disengage at least the accessory assembly 12. By way of example, the user interface 24 forming a trigger may be disposed at a rear handle 22 of the power equipment 10. The trigger may be directly coupled (e.g., mechanically coupled) with the power unit 50 of the power equipment 10, or include a fly by wire connection. For instance, a relative position or orientation of the trigger can be monitored by one or more sensors in electronic communication with the power unit 50. One or more auxiliary actuatable elements may be further included on the power equipment 10. These auxiliary actuatable elements can include, for example, a selectable lock configured to lock a relative position of the trigger during use, a cruise control, a boost mode which enables the operator to temporarily increase an operating speed of the power equipment 10, a reverse button which enables reverse operation of the power unit 50 (the reverse operation may be particularly suitable if the power tool becomes jammed as a result of, e.g., cutting an article that is too thick for the power unit 50), or the like. The power equipment 10 may further include one or more battery status monitors or the like for informing the operator of a particular status or condition of the power tool.

The accessory assembly 12 generally includes any appropriate tool, mechanism, or power device that may receive an input motive force from the power unit 50 to operate in a desired manner. The accessory assembly 12 may include a linear articulating or oscillating device. In a particular embodiment, the accessory assembly 12 is a blade assembly 14 for a power trimmer, in which the blade assembly 14 has a cutting bar including a plurality of blades or teeth operably coupled to the power unit 50 to oscillate the cutting bar in a back-and-forth manner. However, it should be appreciated that the accessory assembly 12 may include other appropriate cutting tools or oscillating devices.

One or more guards 26 may be disposed between the housing(s) and cutting tools to prevent debris or clippings from inadvertently hitting the operator during use of the power equipment 10.

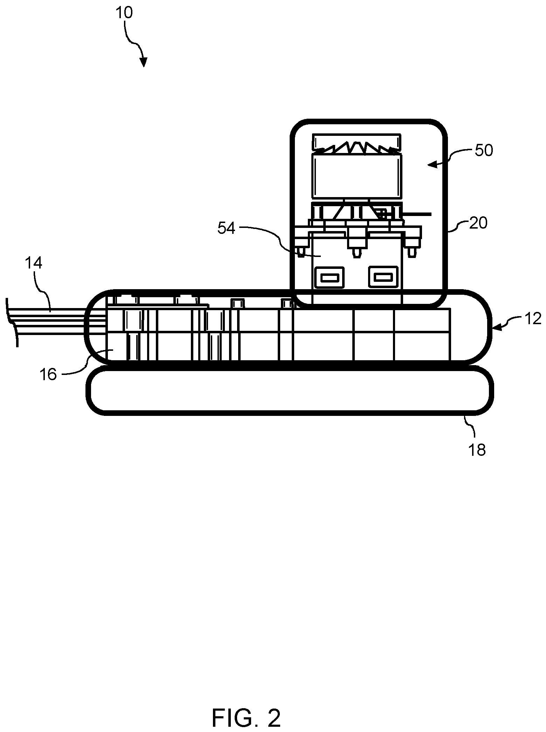

Referring now to Fig. 2, a schematic side cross sectional view of an exemplary embodiment of the power equipment 10 in accordance with aspects of the present disclosure is provided. The embodiment provided in Fig. 2 may be configured substantially similarly as described with regard to Fig. 1. The accessory assembly 12 may particularly include a blade housing 16 at which the blade assembly 14 is positioned and secured to allow for oscillating motion. The accessory assembly 12, or particularly the blade housing 16, is detachably coupled to a detachable first housing 18. The blade assembly 14 includes a power unit interface 52 configured to receive a motive force from the power unit 50 to operate the power equipment 10.

The first housing 18 may be referred to as a lower housing of the power equipment 10. The second housing 20 may be referred to as an upper housing. The accessory assembly 12 can be positioned between the upper and lower housings. However, it should be appreciated that the orientation of first housing 18 and the second housing 20 may be altered, such that the first housing 18 is above the second housing 20, or the first housing 18 and the second housing 20 are laterally separated from one another with the accessory assembly 12 being positioned therebetween. Stated differently, the first housing 18 may form an upper housing and the second housing 20 may form a lower housing.

The power unit 50 is attached to the second housing 20. The power unit 50 is configured to operably couple to the accessory assembly 12 at the power unit interface 52 to provide the motive force, such as to provide power for oscillatory motion of the blade assembly 14. In certain embodiments, the power unit interface 52 is a spline or gear structure configured to receive corresponding splines or gears from the power unit 50. In still certain embodiments, the power unit interface 52 is a clutch, spring, compressive device, or other transmissive device configured to transmit power from the power unit 50 to the accessory assembly 12. The second housing 20 at least partially contains the power unit 50. The power unit 50 may include a battery or cordless electric power unit, a corded electric supply unit, or a mechanical motor, such as an internal combustion engine. A particular embodiment may configure the power unit 50 as a 40-volt cordless battery. However, it should be appreciated that any appropriate voltage, current, or other power output may be utilized.

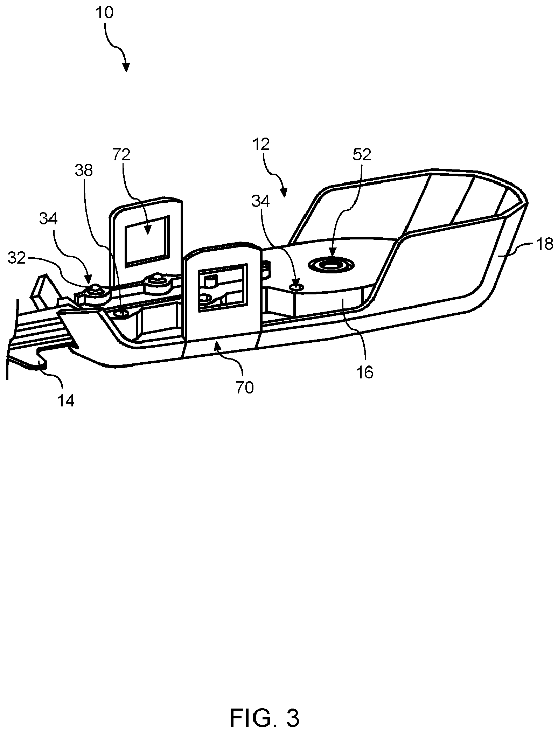

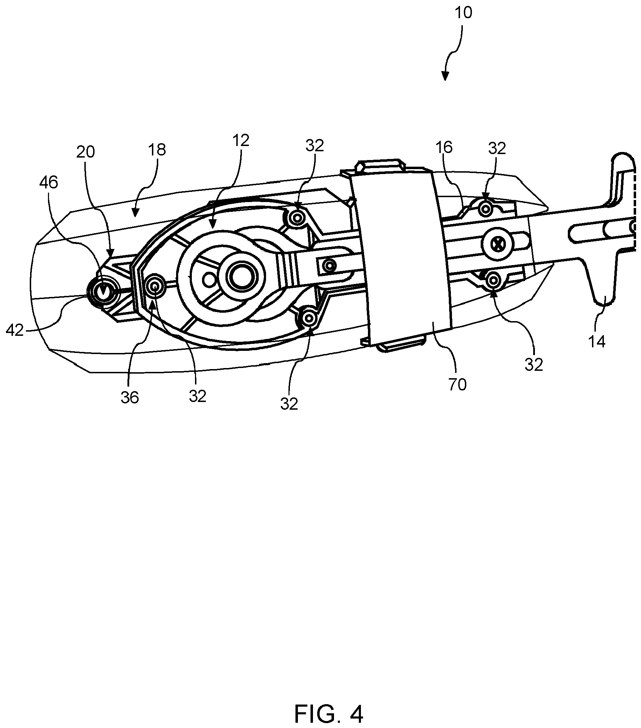

Referring now to Fig. 3, a partially deconstructed perspective view of a portion of an exemplary embodiment of the power equipment 10 is provided. Referring also to Fig. 4, a perspective view of a portion of an exemplary embodiment of the power equipment 10 is provided. Fig. 4 provides a see-through view of the first housing 18 to the accessory assembly 12 and second housing 20. Referring to Fig. 3 and Fig. 4, a first fastener 32 is extendable from the first housing 18 through the accessory assembly 12 to couple the accessory assembly 12 to the first housing 18. It should be appreciated that some depictions of the fasteners may be omitted for clarity. In a particular embodiment, the first fastener 32 is extendable from the first housing 18 through the blade housing 16 to detachably couple the blade assembly 14 to the first housing 18. The blade housing 16 and the blade assembly 14 may include any desired openings or slots, including linear or curvilinear openings, to allow the first fastener 32 to extend therethrough while allowing for oscillatory operation of the blade assembly 14.

Referring particularly to Fig. 4, as well depicted at least in part in Fig. 3, a second fastener 42 is extendable from the first housing 18 to the second housing 20 to detachably couple the power unit 50 to the first housing 18 and position the accessory assembly 12 between the power unit 50 and the first housing 18. In a particular embodiment, a second fastener 42 is extendable from the first housing 18 to the second housing 20 to detachably couple the power unit 50 to the first housing 18 and position the blade housing 16 between the power unit 50 and the first housing 18.

As depicted in Fig. 3 and Fig. 4, the accessory assembly 12 can be configured to receive a terminal end 34 of the first fastener 32. In a particular embodiment, the blade housing 16 of the accessory assembly 12 can be configured to receive the terminal end of the first fastener 32. A head end 36 of the first fastener 32 can be secured at the first housing 18. The terminal end may generally define a distal end of the fastener relative to a head end. Various embodiments of the terminal end include a threaded end of a mechanical fastener. The terminal end 34 can extend into the accessory assembly 12. Accordingly, the first housing 18 and the accessory assembly 12 can be secured to one another and separable as desired to facilitate removal of the accessory assembly 12.

The second housing 20 can be configured to receive a terminal end 44 of the second fastener 42. A head end 46 of the second fastener 42 can be secured at the first housing 18. Accordingly, the first housing 18 and the second housing 20 can be coupled to one another and separable to allow the accessory assembly 12 and first housing 18 to be removed and/or replaced separately from the power unit 50 and the second housing 20.

It should be understood that separating the first housing 18 and the second housing 20 from one another may be performed in a manner such that the first housing 18 and the second housing 20 are not in communication with one another in the separated state. That is, for example, the first housing 18 can be completely separable from the second housing 20, i.e., the second fastener 42 is not coupled to the second housing 20, and the first housing 18 is entirely independent therefrom. In this regard, the first housing 18 and second housing 20 can be separated and operated-on independently. In a particular instance, the first housing 18 can be operated-on after removal from the second housing 20, allowing the operator to lay the first housing 18 on a table, bench, or other work surface. At such time, the operator can then de-couple one or more of the first fasteners 32 so as to remove the accessory assembly 12. When the accessory assembly 12 is being replaced, the operator can then install a replacement accessory assembly 12 using the first fastener(s) 32 (or a new set of first fasteners 32) while the first housing 18 remains de-coupled from the second housing 20. The first housing 18 can then be reintroduced to the second housing 20 and the second fastener(s) 42 (or a new second fastener(s) 42) can be used to couple the first housing 18 and second housing 20 together. Without wishing to be bound by any particular theory, it is believed that complete removal of the first housing 18 from the second housing 20 with the accessory assembly 12 remaining coupled to the first housing 18 may afford easy access to the accessory assembly 12 without compromising structural integrity of the power equipment 10. More particularly, by fixedly attaching the accessory assembly 12 to the first housing 18 while permitting complete removal of the first housing 18 from the second housing 20, the operator can quickly access or adjust the accessory assembly 12 while the power equipment 10 does not suffer from structural weaknesses which might otherwise occur with a quick release interface.

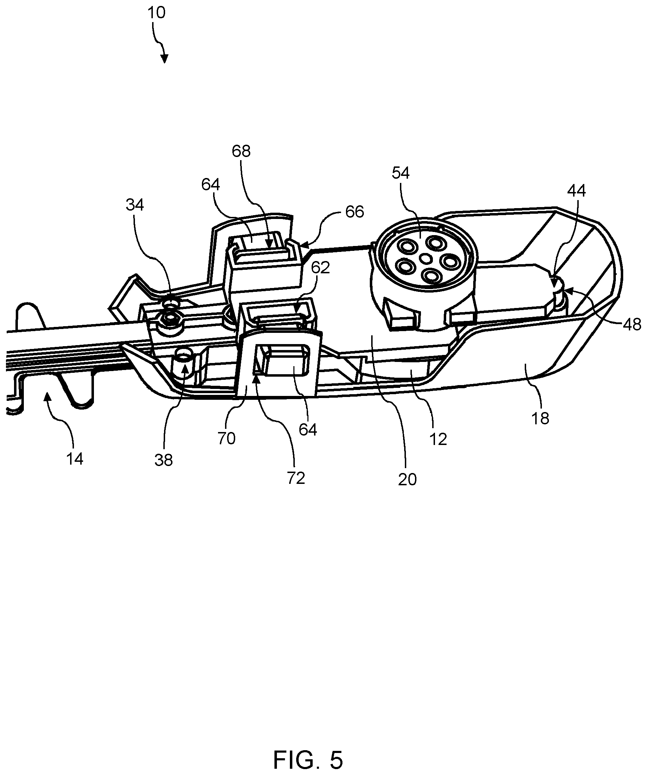

Referring now to Fig. 5, a perspective view of a portion of an exemplary embodiment of the power equipment 10 is provided. The embodiment depicted in Fig. 5 is configured substantially similarly as depicted and described with regard to Figs. 1-4. Fig. 5 further depicts an engagement structure 38, 48. The engagement structure can include, for example a post, a cylinder, or other structure configured to receive a mateable interface, e.g., the threads, of a fastener. The engagement structure may include alignment features configured to pre-align the first housing 18 relative to the second housing 20, the first housing 18 relative to the accessory assembly 12, the second housing 20 relative to the accessory assembly 12, or the like. In an embodiment, the alignment features can include one or more posts which project, e.g., from the first housing 18 and/or from the second housing 20, in a direction generally parallel with a direction of movement when the first housing 18 and second housing 20 are translated together to be mated. The one or more posts may be insertable into one or more alignment slots which can receive the posts so as to pre-align the first housing 18, the second housing 20, the accessory assembly 12, or combinations thereof, prior to introduction of the respective fastener(s). Additionally, or alternatively, the alignment slots or posts may be formed integrally at one or more of the first housing 18, the second housing 20, or the accessory assembly 12. In a particular embodiment, at least one of the posts and alignment slots can correspond with the location(s) of the first fastener 32 or the second fastener 42. That is, for example, the posts or slots may be associated with the first fastener 32 and the second fastener 42, respectively.

In various embodiments, a first engagement structure 38 is positioned at the accessory assembly 12. The first engagement structure 38 is configured to receive the first fastener 32. By way of example, the first engagement structure 38 may be a threaded interface configured to secure the first fastener 32 while allowing for non-destructive coupling and de-coupling of the first fastener 32 from the accessory assembly 12. In certain embodiments, a portion of the first engagement structure 38 may be formed at a location of the first housing 18 corresponding to a location of the accessory assembly 12 at which the first fastener 32 is extendable therethrough, such as described herein.

In a particular embodiment, a second engagement structure 48 is positioned at the second housing 20. The second engagement structure 48 is configured to receive the second fastener 42. By way of example, the second engagement structure 48 may be a threaded interface configured to secure the second fastener 42 while allowing for non-destructive coupling and de-coupling of the second fastener 42 from the second housing 20. In certain embodiments, a portion of the second engagement structure 48 may be formed at a location of the second housing 20 corresponding to a location of the first housing 18 at which the second fastener 42 is extendable therethrough, such as described herein.

Fig. 5 further depicts a gear assembly 54 of the power unit 50 positioned within the second housing. The depicted gear assembly 54 includes a planetary gear arrangement, including, e.g., a sun gear and a plurality of planetary gears orbiting the sun gear. In certain instances, the gear assembly 54 may be configured to alter the rotational speed of the motive force or power from the motor. For instance, the gear assembly 54 may reduce the motive force in a ratio of, e.g., 1:2, 1:3 ,1:4, or the like. The power unit interface 52 (Fig. 3) of the accessory assembly 12 can receive motive force or power from the power unit 50 to operate, e.g., drive, the accessory assembly 12. In a particular embodiment, the power unit interface 52 at the accessory assembly 12 is configured to operably connect to the gear assembly 54 of the power unit 50 to receive motive force from the power unit 50.

Referring still to Fig. 5, in certain embodiments, the second housing 20 forms a retainer slot 62 configured to receive a button 64. The button 64 may include any articulatable member, such as a spring, or a material having springing or elastic properties that allow for the button 64 to retain structure or form until depressed by an external force. In an embodiment, second housing 20 forms a plurality of retainer slots 62. Each of the retainer slots 62 can be configured to receive at least one button 64. In the depicted embodiment, the plurality of retainer slots 62 includes two retainer slots 62 disposed on opposite sides of the second housing 20. More particularly, the two retainer slots 62 can be disposed on opposite lateral sides of the second housing 20. The retainer slots 62 can be disposed in alignment with one another such that an axis of displacement of each of the buttons 64 is parallel, or even coaxial. As depicted, in accordance with a particular embodiment, the retainer slots 62 can be configured to receive the buttons 64 by translating the buttons 64 in a direction generally normal to the axis of displacement of the buttons 64.

The retainer slots 62 depicted in Fig. 5 each include a volume having one or more shoulders 66. The button 64 can include a complementary shoulder 68 that prevents the button 64 from ejecting from the retainer slot 62. In such a manner, a biasing force can be introduced to bias the buttons 64 in a direction generally parallel with the axis of displacement. The biasing force can be provided, for example, by a spring. The spring can include a helical spring. The helical spring may be disposed within the retainer slot 62. In the spring-biased (normal) position, the buttons 64 may thus project from the retainer slots 62. In the operator-biased (depressed) position, the buttons 64 may be depressed into the retainer slots 62.

Referring still to Fig. 5, the power equipment 10 may further include a retainer clip 70 forming an opening 72 to receive the button 64. In a particular embodiment, the retainer clip 70 is separable from the first housing 18. That is, for example, the retainer clip 70 may be a component separate from the first housing 18. The retainer clip 70 may furthermore be separable from the second housing, such as may be formed as a component separate from the first housing 18 and the second housing 20. In a still particular embodiment, the retainer clip 70 is configured to extend around the first housing 18. In the embodiment depicted in Fig. 5, the retainer clip 70 extends from a first button 64 disposed on a first lateral side of the first housing 18 to a second button 64 disposed on a second lateral side of the first housing 18. The first and second buttons 64 may normally pass through the openings 72 in the retainer clip 70 so as to maintain the retainer clip 70 engaged with the power equipment 10. When the operator wishes to remove the retainer clip 70, the operator can depress at least one of the first and second buttons 64 so as to release the retainer clip 70. In certain instances, release of the retainer clip 70 may require actuation of both the first and second buttons 64. In other instances, actuation of only one of the first and second buttons 64 is required to release the retainer clip 70. In yet other instances, the power equipment 10 may include only a single button 64. For instance, the retainer clip 70 may be hinged to the power equipment 10 where one of the first or second buttons 64 is located. By depressing the one button 64, the retainer clip 70 may be pivotable so as to clear the first housing 18 and permit removal therefrom.

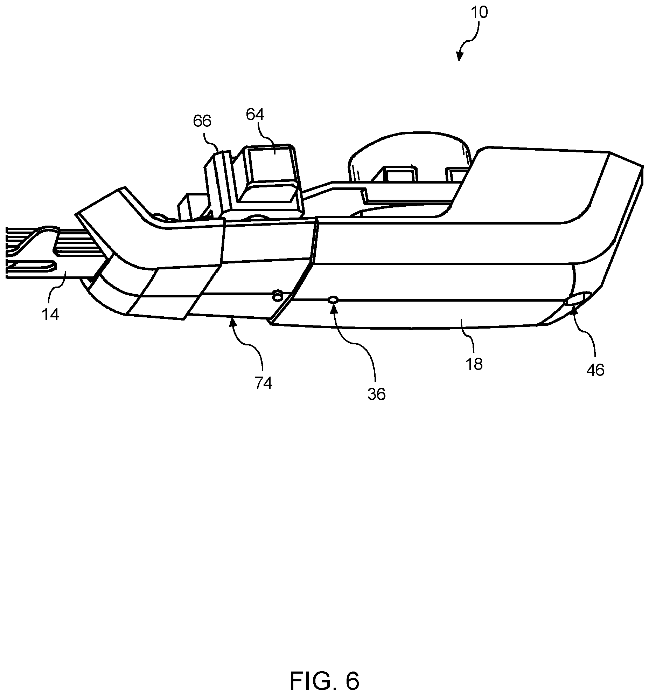

Referring to Fig. 6, a perspective view of a portion of an exemplary embodiment of the power equipment 10 is provided. The embodiment depicted in Fig. 6 is configured substantially similarly as depicted and described with regard to Figs. 1-5. In certain instances, at least one of the first housing 18 and second housing 20 can include a channel 74 in which the retainer clip 70 (depicted in Fig. 5 and omitted in Fig. 6) is disposed when engaged with the power equipment 10. The channel can be recessed from a surface of the first housing 18 or the second housing 20. In a particular embodiment, the channel 74 can be recessed by a depth corresponding with a thickness of the retainer clip 70, such that when the retainer clip 70 is flush with the first housing 18. In another embodiment, the channel 74 can be recessed by a depth less than the thickness of the retainer clip 70, such that the retainer clip 70 projects outward from the first housing 18.

The retainer clip 70 may form a secondary attachment between the first housing 18 and the second housing 20. That is, the retainer clip 70 may form an auxiliary attachment protocol between the first housing 18 and the second housing 20 in addition to the aforementioned second fastener 42 described above. In embodiments having the retainer clip 70 the operator must first remove the retainer clip 70 before the first housing 18 and the second housing 20 may be removed from one another. This may be performed before or after removal of the second fastener 42. When re-mating the first housing 18 and the second housing 20 together, the retainer clip 70 may be installed before the second fastener(s) 42. In this regard, the retainer clip 70 may act as a temporary retaining element when mating the first housing 18 and second housing 20 together, allowing the operator to temporarily hold the first housing 18 and second housing 20 together prior to installation of the second fastener(s) 42. That is, the retainer clip 70 may form a quick connect between the first housing 18 and the second housing 20. The retainer clip 70 may also form a toolless connection between the first housing 18 and second housing 20. The toolless connection may be used without requiring any tools, e.g., screw drivers, wrenches, or the like.

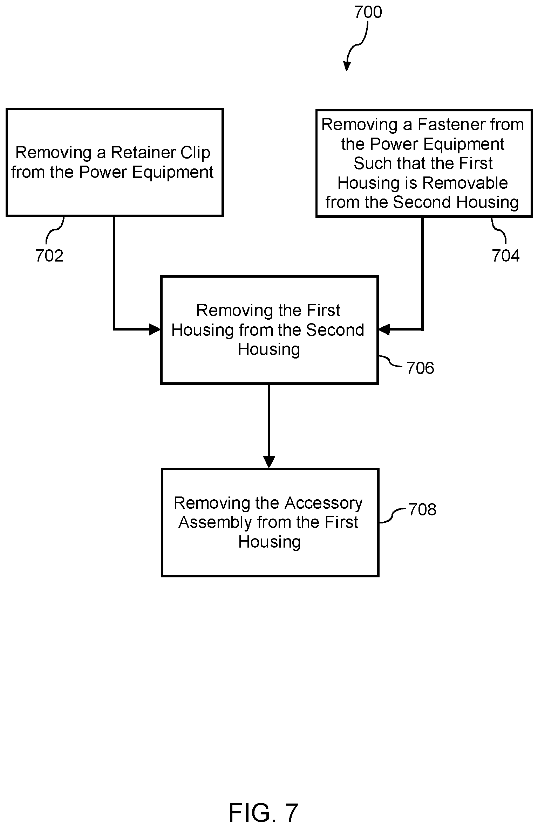

Fig. 7 illustrates a method of using power equipment (hereinafter, "method 700") in accordance with an exemplary embodiment of the present disclosure. In particular, the method 700 is directed to a method of changing an accessory assembly of the power equipment. Embodiments of the method 700 may be performed with embodiments of the power equipment 10 such as depicted and described with regard to Figs. 1-6. However, it should be appreciated that the method 700 may be performed with other embodiments of power equipment not depicted and described herein.

The method 700 can include a step 702 of removing a retainer clip (e.g., retainer clip 70) from the power equipment (e.g., power equipment 10). The retainer clip may selectively secure a first housing (e.g., first housing 18) and a second housing (e.g., second housing 20) of the power equipment together. The step 702 of removing the retainer clip may be performed by depressing one or more buttons (e.g., button 64) extending from the power equipment. Upon depressing the button(s), the retainer clip may be completely or partially removed from the power equipment such that the first housing is displaceable therefrom.

The method 700 can further include a step 704 of removing a fastener (e.g., second fastener 42) from the power equipment such that the first housing is removable from the second housing. It should be understood that in certain instances, the step 702 is performed prior to step 704. In other instances, step 704 can be performed prior to step 702. It is also noted that in accordance with some embodiments, the step 702 of removing the retainer clip may be omitted. That is, for example, the power equipment may lack the aforementioned retainer clip.

After completing steps 702 and 704, or just step 704, the method 700 can further include a step 706 of removing the first housing from the second housing. The step 706 of removing the first housing from the second housing may be performed by displacing the first housing relative to the second housing. In certain instances, displacement may include linear displacement. In other instances, displacement may include rotational displacement. In yet other instance, displacement may include a combination of rotational and linear displacement.

The step 706 of removing the first housing from the second housing may result in an accessory assembly (e.g., accessory assembly 12) being removed from a power unit (e.g., power unit 50). That is, the power unit may be coupled with the second housing while the accessory assembly is coupled with the first housing. By removing the first housing from the second housing, the accessory assembly may thus be removed from the power unit.

After performing step 706, the method 700 can include a step 708 of removing the accessory assembly from the first housing. The step 708 of removing the accessory assembly from the first housing may be performed by disengaging one or more fasteners (e.g., first fastener 32). The first fasteners may selectively retain the accessory assembly relative to the first housing. With the first fasteners removed, the accessory assembly may be repaired, replaced, or otherwise operated on independent of the first housing. The accessory assembly, or a replacement accessory assembly, can then be recoupled with the first housing by reattaching the first fasteners (or a new set of first fasteners) and the method 700 can be performed in reverse. Alternatively, the method 700 at step 708 may include replacing the accessory assembly together with the first housing. Accordingly, the accessory assembly and the first housing may form an integral component that may be fabricated or pre-fabricated and provided separately from the second housing and/or the power unit. It is noted that re-engaging the retainer clip to the power equipment at step 702 may be performed prior to re-engaging the second fasteners. In such a manner, and as described above, this may permit a quick connect between the first housing and second housing to permit easier installation of the second fasteners.

Embodiments of the power equipment 10 provided herein facilitate quicker removal of an accessory assembly 12, such as a blade assembly 14 for a power trimmer, from a power unit 50. The first fastener(s) 32 and/or the second fastener(s) 42 may include any desired mechanical fastener, such as, but not limited to, screws, nuts and bolts, or other detachable, non-destructive, fasteners. In one particular embodiment, the fasteners may include hexagonal-head screws with external faces or hexagonal-sockets with internal faces. In other embodiments, the fasteners may include slotted heads or Phillips heads, alternatively to or in addition to, hexagonal heads. The first fastener 32 secures the first housing, such as a lower housing of the power equipment 10, to the accessory assembly 12, such as the blade assembly 14 or any other desired oscillating tool or component that may be subject to substantial wear and replacement relative to other components of the power equipment 10 (e.g., the power unit 50, the handle(s) 22, the housings 18, 20, etc.). The second housing 20, including, at least in part, the power unit 50, is secured to the first housing 18 via a second fastener separate from the first fastener 32. For instance, the first fastener 32 may secure to the first housing 18 to the accessory assembly 12 without passing the first fastener 32 through the second housing 20 and power unit 50. The second fastener 42 may secure the second housing 20 and power unit 50 to the first housing 18 without passing the second fastener through the accessory assembly 12. Accordingly, the power unit 50 and the accessory assembly 12 may be separately removed and replaced. Certain embodiments may allow for the power unit 50 to interchange with various accessory assemblies, such as different oscillating tools or trimmers. Still further, embodiments provided herein may facilitate replacement of worn accessories while retaining the power unit 50.

The retainer clip may further secure the first housing 18 to the second housing 20 while providing a quick-connect or quick-disconnect interface. As the retainer clip, button(s) 64, and second housing 20 may be separable from one another, embodiments of the power equipment 10 provided herein allow for replacement of one or more components separately from one another. Still further, relatively high-wear or high-use components, such as the accessory assembly 12, may be removed and/or replaced without replacing longer-life components, such as the power unit 50. Alternatively, power units 50, such as battery-powered electric devices, may be replaced or exchanged to secure an accessory assembly 12. This quick connect interface may further be provided without compromising the structural integrity of the power equipment 10. That is, embodiments described herein may facilitate quick connection and disconnection without reducing structural integrity which might otherwise occur in a quick connect interface.

In a particular embodiment, a plurality of first fasteners 32 is extended through a plurality of locations through the first housing 18 and the accessory assembly 12 to secure the accessory assembly 12 to the first housing 18. In one embodiment, a single second fastener 42 is extended through the first housing 18 into the second housing 20 to at least partially secure the power unit 50 to the first housing 18. The retainer clip may further secure the power unit 50 to the first housing 18 via the button 64 secured within the retainer slot 62 at the second housing 20. It should be appreciated that any appropriate quantity of first fasteners 32 and second fasteners 42 may be utilized. Embodiments provided herein may depict configurations allowing for a minimal quantity of fasteners to secure the housings 18, 20, the accessory assembly 12, and the power unit 50 together in desirably operable condition while facilitating removal and replacement of one or more components described herein.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

Further aspects of the invention are provided by one or more of the following embodiments:
1. A power equipment including an accessory assembly detachably coupled to a first housing, wherein the accessory assembly comprises a power unit interface configured to receive a motive force therethrough; a power unit attached to a second housing, wherein the power unit is configured to operably couple to the accessory assembly at the power unit interface to provide the motive force therethrough; a first fastener extendable from the first housing through the accessory assembly to couple the accessory assembly to the first housing; and a second fastener extendable from the first housing to the second housing to detachably couple the power unit to the first housing and position the accessory assembly between the power unit and the first housing.
2. The power equipment of any one or more embodiments herein, wherein the accessory assembly is configured to receive a terminal end of the first fastener.
3. The power equipment of any one or more embodiments herein, wherein the second housing is configured to receive a terminal end of the second fastener.
4. The power equipment of any one or more embodiments herein, wherein the power unit includes a gear assembly positioned within the second housing, and wherein the power unit interface at the accessory assembly is configured to operably connect to the gear assembly to receive motive force from the power unit.
5. The power equipment of any one or more embodiments herein, wherein the second housing forms a retainer slot configured to receive a button, wherein the button is articulatable within the retainer slot.
6. The power equipment of any one or more embodiments herein, the power equipment including a retainer clip forming an opening to receive the button through the retainer slot, wherein the retainer clip is configured to detachably couple to the button.
7. The power equipment of any one or more embodiments herein, wherein the retainer clip is configured to extend around the first housing from the button.
8. The power equipment of any one or more embodiments herein, wherein the retainer clip is separable from the first housing and the second housing.
9. The power equipment of any one or more embodiments herein , wherein the accessory assembly includes a blade assembly positioned within a blade housing.
10. The power equipment of any one or more embodiments herein, wherein the blade housing is detachably coupled to the first housing via the first fastener.
11. The power equipment of any one or more embodiments herein, wherein the power unit is a cordless electric power device, a mechanical motor, or a cordless battery.
12. A power trimmer including a blade assembly positioned within a blade housing, wherein the blade housing is detachably coupled to a first housing, and wherein the blade assembly includes a power unit interface configured to receive a motive force therethrough; a power unit attached to a second housing, wherein the power unit is configured to operably couple to the power unit interface to provide the motive force therethrough to the blade assembly; a first fastener extendable from the first housing through the blade housing to detachably couple the blade assembly to the first housing; and a second fastener extendable from the first housing to the second housing to detachably couple the power unit to the first housing and position the blade housing between the power unit and the first housing.
13. The power trimmer of any one or more embodiments herein, wherein the blade housing is configured to receive a terminal end of the first fastener.
14. The power trimmer of any one or more embodiments herein, wherein the second housing is configured to receive a terminal end of the second fastener.
15. The power trimmer of any one or more embodiments herein, wherein the power unit includes a gear assembly positioned within the second housing, and wherein the power unit interface is configured to operably connect to the gear assembly to receive motive force from the power unit.
16. The power trimmer of any one or more embodiments herein, wherein the second housing forms a retainer slot configured to receive a button, wherein the button is articulatable within the retainer slot.
17. The power trimmer of any one or more embodiments herein, the power trimmer including a retainer clip forming an opening to receive the button through the retainer slot, wherein the retainer clip is configured to detachably couple to the button.
18. The power trimmer of any one or more embodiments herein, wherein the retainer clip is configured to extend around the first housing from the button.
19. The power trimmer of any one or more embodiments herein, wherein the retainer clip is separable from the first housing and the second housing.
20. The power trimmer of any one or more embodiments herein, wherein the power unit is a cordless electric power device, a mechanical motor, or a cordless battery.
21. The power trimmer of any one or more embodiments herein, including the power equipment of any one or more embodiments herein.
22. A method of changing an accessory assembly of the power equipment, the method including removing a retainer clip from the power equipment; and removing the first housing from the second housing.
23. A method of changing an accessory assembly of the power equipment, the method including removing a fastener from the power equipment such that the first housing is removable from the second housing; and removing the first housing from the second housing.
24. A method of changing an accessory assembly of the power equipment, the method including removing a retainer clip from the power equipment; removing a fastener from the power equipment such that the first housing is removable from the second housing; and removing the first housing from the second housing.
25. The method of any one or more embodiments herein, the method including removing the accessory assembly from the first housing.
26. A method of changing an accessory assembly of the power equipment of any one or more embodiments herein, the method including the steps of any one or more embodiments herein.

## Claims

1. A power equipment (10), the power equipment (10) comprising:
an accessory assembly (12) detachably coupled to a first housing (18), wherein the accessory assembly (12) comprises a power unit interface (52) configured to receive a motive force therethrough;
a power unit (50) attached to a second housing (20), wherein the power unit (50) is configured to operably couple to the accessory assembly (12) at the power unit interface (52) to provide the motive force therethrough;
a first fastener (32) extendable from the first housing (18) through the accessory assembly (12) to couple the accessory assembly (12) to the first housing (18);
a second fastener (42) extendable from the first housing (18) to the second housing (20) to detachably couple the power unit (50) to the first housing (18) and position the accessory assembly (12) between the power unit (50) and the first housing (18).

2. The power equipment (10) of claim 1, wherein the accessory assembly (12) is configured to receive a terminal end of the first fastener (32).

3. The power equipment (10) of claim 1, wherein the second housing (20) is configured to receive a terminal end of the second fastener (42).

4. The power equipment (10) of claim 1, wherein the power unit (50) comprises a gear assembly (54) positioned within the second housing (20), and wherein the power unit interface (52) at the accessory assembly (12) is configured to operably connect to the gear assembly (54) to receive motive force from the power unit (50).

5. The power equipment (10) of claim 1, wherein the second housing (20) forms a retainer slot (62) configured to receive a button (64), wherein the button (64) is articulatable within the retainer slot (62).

6. The power equipment (10) of claim 5, the power equipment (10) comprising:
a retainer clip (70) forming an opening to receive the button (64) through the retainer slot (62), wherein the retainer clip (70) is configured to detachably couple to the button (64).

7. The power equipment (10) of claim 6, wherein the retainer clip (70) is configured to extend around the first housing (18) from the button (64).

8. The power equipment (10) of claim 6, wherein the retainer clip (70) is separable from the first housing (18) and the second housing (20).

9. The power equipment (10) of claim 1, wherein the power unit (50) is a cordless electric power device, a mechanical motor, or a cordless battery.

10. The power equipment (10) of claim 1, wherein the accessory assembly (12) comprises a blade assembly (14) positioned within a blade housing (16).

11. The power equipment (10) of claim 10, wherein the blade housing (16) is detachably coupled to the first housing (18) via the first fastener (32).

12. The power equipment (10) of claim 10, wherein the blade assembly (14) comprises a power unit interface (52) configured to receive a motive force therethrough.

13. The power equipment (10) of claim 12, wherein the power unit (50) is configured to operably couple to the power unit interface (52) to provide the motive force therethrough to the blade assembly (14).

14. The power equipment (10) of claim 13, wherein the first fastener (32) is extendable from the first housing (18) through the blade housing (16) of the accessory assembly (12) to detachably couple the blade assembly (14) to the first housing (18), and wherein the second fastener (42) is extendable from the first housing (18) to the second housing (20) to detachably couple the power unit (50) to the first housing (18) and position the blade housing (16) between the power unit (50) and the first housing (18).

15. The power trimmer of claim 9, wherein the blade housing (16) is configured to receive a terminal end (34) of the first fastener (32).
